**Europäisches Patentamt**

**European Patent Office**

**Office européen des brevets**

(19)

(11) Veröffentlichungsnummer: **0 120 259**
**B1**

(12)
# EUROPÄISCHE PATENTSCHRIFT

(45) Veröffentlichungstag der Patentschrift:
02.09.87

(51) Int. Cl.⁴: **G 01 D 15/24,** B 41 J 3/16

(21) Anmeldenummer: **84101499.6**

(22) Anmeldetag: **14.02.84**

(54) **Registriergerät mit einem bewegten Registrierstreifen und mindestens einem quer zu dessen Vorschubrichtung angeordneten Kamm mit unbeweglichen Schreibelektroden.**

(30) Priorität: **24.02.83 DE 3306541**

(43) Veröffentlichungstag der Anmeldung:
**03.10.84 Patentblatt 84/40**

(45) Bekanntmachung des Hinweises auf die Patenterteilung:
**02.09.87 Patentblatt 87/36**

(84) Benannte Vertragsstaaten:
**AT CH DE FR GB IT LI NL**

(56) Entgegenhaltungen:
**EP-A-0 096 085**
**DE-A-2 220 755**

(73) Patentinhaber: **Siemens Aktiengesellschaft Berlin und München, Wittelsbacherplatz 2, D-8000 München 2 (DE)**

(72) Erfinder: **Hellmann, Richard, Frühlingsstrasse 34, D-6729 Jockgrim (DE)**
Erfinder: **Knöller, Philipp- Martin, Finkenweg 8, D-7505 Ettlingen 3 (DE)**

**Beschreibung**

Die Erfindung geht von einem Registriergerät mit einem bewegten Registrierstreifen und mindestens einem quer zur Vorschubrichtung des Registrierstreifens angeordneten Kamm mit vom Registrierstreifen abhebbaren unbeweglichen Schreibelektroden aus.

Bei einer bekannten Einrichtung dieser Art (Siemens-Druckschrift "Betriebsanleitung für OSCILLOREG M02001") kann das Einfädeln des Registrierstreifens zwischen einer Transport- und Andrückwalze nur unter Abheben des Schreibelektrodenkammes erfolgen, das nicht vergessen werden darf, wenn die feinen Kammelektroden nicht beschädigt werden sollen. Deshalb sind beim Bekannten von einer Registrierstreifen-Magazinklappe betätigte Hebel vorgesehen, die beim Öffnen der Klappe den Schreibelektrodenkamm von der Transportwalze abheben.

Dieses Hebelgetriebe ist konstruktiv aufwendig und empfindlich. Es wird deshalb eine Lösung gesucht, die dieses Getriebe überflüssig macht, die jedoch kein Erinnern eines Betreibers des Registriergerätes an das vor dem Einfädeln des Registrierstreifens notwendige Abheben des Elektrodenkammes voraussetzt.

Bei einem eingangs beschriebenen Registriergerät wird diese Aufgabe gemäß der Erfindung durch die Merkmale des Anspruchs 1, Fassung A bzw. Fassung B gelöst.

Ein Gerät mit den Merkmalen des Anspruchs 1, Fassung A, ist in EP-A1-0 096 085 (Anmeldetag: 04.06.82, Veröffentlichungstag: 21.12.83) beschrieben.

Die neue Lösung hat den Vorteil, daß bei ausgeschaltetem Elektromagneten der Schreibelektrodenkamm immer abgehoben und für das Auflegen des Kammes ein besonderes Signal erforderlich ist. Beim Einlegen einer Registrierstreifenrolle in das Magazin des Registrierers und beim Einfädeln des Registrierstreifens zwischen die Walzen können deshalb die Elektroden des Schreibkammes nicht beschädigt werden. Ein automatisch wirkendes Gestänge zwischen Magazinklappe und Elektrodenkamm ist dafür nicht mehr notwendig. Die neue Lösung hat den weiteren Vorteil, daß sich bei kanalweise unterteilten Kämmen einzelne bestimmte Kanäle repräsentierende Kämme elektrisch anwählen lassen, beispielsweise kann ein einzelner Teilkamm angewählt werden, der zur alpha-numerischen Beschriftung des Registrierstreifens dient. Die Anwahl einzelner Kanäle kann z. B. von am Registriergerät angeordneten Tasten aus oder über externe, von mit dem Registriergerät verbundenen elektrischen Einheiten ausgehende Signale erfolgen.

Zweckmäßig ist bei der Lösung gemäß Anspruch 1, Fassung A, der Einschaltvorgang des Elektromagneten mit dem Einschaltvorgang für den Papiervorschub gekoppelt. Bei jedem Abschalten des Papiervorschubes wird dann der Schreibelektrodenkamm vom Registrierstreifen abgehoben. Besteht der Registrierstreifen beispielsweise aus Metallpapier, werden durch den Abhebvorgang an den Elektroden haftende Rückstände vom Abbrand des Metallbelages abgeschüttelt. Gleichzeitig werden sich in Vorschubrichtung hinter dem Kamm ansammelnde lose Abbrandreste freigegeben.

Besonders vorteilhaft ist eine Ausführungsform, bei welcher der Einschaltvorgang des Elektromagneten gegenüber dem des Papiervorschubes verzögert erfolgt. Bei der bekannten Anordnung, bei der der Registrierstreifenvorschub eingeschaltet wurde, während der Schreibelektrodenkamm auf dem Registrierstreifen auflag, hat sich durch die Reibung des Kammes auf dem Registrierstreifen der Anlaufvorgang verzögert. Der entstehende Schrieb war dadurch verzerrt und unbrauchbar. Bei dünnen Registrierstreifen konnten diese während des Anlaufs unter dem Druck des Elektrodenkammes auch zerknittern. Die neue Lösung erlaubt ein Beschleunigen des Registrierstreifens auf die Aufzeichnungsgeschwindigkeit, bevor der Elektrodenkamm aufliegt. Der entstehende Bchrieb ist nicht mehr verzerrt.

Der einwandfreie Anlauf des Papiers wird unterstützt durch eine schwimmende Lagerung der Papierrolle im Magazin.

Zweckmäßig ist das Kraftelement eine Feder.

Neben dem oben schon erwähnten Metallpapier kann vorteilhafterweise auch thermosensitives Papier oder ein elektrographisch zu entwickelnder Registrierstreifen verwendet werden.

Die Erfindung wird anhand einer Figur, die ein Ausführungsbeispiel in schematischer Darstellung zeigt, erläutert.

Ein Schreibkamm 1, von dem der Einfachheit halber nur eine einzige Schreibelektrode dargestellt ist, ist auf einem Kammträger 2 befestigt, der von einem Elektromagneten 3 um eine Lagerstelle 4 entgegen der Kraft einer Schraubenfeder 5 auf einen Registrierstreifen 6 gezogen werden kann. Der Registrierstreifen 6 läuft über eine Transportwalze 7, gegen die er von einer Andruckwalze 8 gepreßt wird. Die Transportwalze 7 dient gleichzeitig als Gegenlager für den Auflagedruck des Schreibelektrodenkammes 1. Der Registrierstreifen ist als Vorratsrolle 9 im Magazin eines Gehäuses 10 für den Registrierer schwimmend gelagert.

**Patentansprüche** für die Vertragsstaaten AT, CH, LI, NL.

1. Registriergerät mit einem bewegten Registrierstreifen (6) und mindestens einem quer zur Vorschubrichtung des Registrierstreifens angeordneten Kamm (1) mit vom Registrierstreifen abhebbaren

Schreibelektroden, dadurch gekennzeichnet, daß der Kamm (1) dem Einfluß eines dauernd auf ihn in vom Registrierstreifen (6) abhebender Richtung wirkenden Kraftelementes (5) und eines in eingeschaltetem Zustand den Kamm (1) mit dem Registrierstreifen (6) in Berührung bringenden Elektromagneten (3) unterworfen ist.

2. Registriergerät nach Anspruch 1, dadurch gekennzeichnet, daß der Einschaltvorgang des Elektromagneten (3) mit dem des Registrerstreifenvorschubes gekoppelt ist.

3. Registriergerät nach Anspruch 2, dadurch gekennzeichnet, daß der Einschaltvorgang des Elektromagneten (3) gegenüber dem des Registrierstreifenvorschubes verzögert erfolgt.

4. Registriergerät nach Anspruch 3, dadurch gekennzeichnet, daß für eine Vorratsrolle (9) des Registrierstreifens (6) eine schwimmende Lagerung vorgesehen ist.

5. Registriergerät nach Anspruch 1 oder einem der vorausgehenden Ansprüche, dadurch gekennzeichnet, daß das Kraftelement (5) eine Feder ist.

**Patentansprüche** für die Vertragsstaaten DE, FR, GB, IT.

1. Registriergerät mit einem bewegten Registrierstreifen und mindestens einem quer zur Vorschubrichtung des Registrierstreifens angeordneten Schreibelektrodenkamm (1), der dem Einfluß eines dauernd auf ihn in vom Registrierstreifen (6) abhebender Richtung wirkenden Kraftelements (5) in Form einer Feder und eines bei Erregung den Schreibelektrodenkamm auf den Registrierstreifen aufsetzenden Elektromagneten (3) unterworfen ist, wobei der Einschaltvorgang des Elektromagneten (3) mit dem des Registrierstreifenvorschubs gekoppelt ist.

2. Registriergerät nach Anspruch 1, dadurch gekennzeichnet, daß der Einschaltvorgang des Elektromagneten (3) gegenüber dem des Registrierstreifenvorschubs verzögert erfolgt.

3. Registriergerät nach Anspruch 2, dadurch gekennzeichnet, daß die Vorratsrolle (9) des Registrierstreifens (6) schwimmend gelagert ist.

**Claims** for the Contracting States AT, CH, LI, NL

1. A recording device comprising a moving recording tape (6) and at least one comb (1) which is arranged transversely to the direction of feed of the recording tape and is provided with recording electrodes which can be lifted from the recording tape, characterised in that the comb (1) is subjected to the influence of a force-exerting element (5) which acts continuously on the comb to lift it from the recording tape, and to the influence of an electromagnet (3) which, when switched on, brings the comb (1) into contact with the recording tape (6).

2. A recording device as claimed in Claim 1, characterised in that the switch-on operation of the electromagnet (3) is coupled to that of the recording position feed.

3. A recording device as claimed in Claim 2, characterised in that the switch-on operation of the electromagnet (3) is delayed in relation to that of the recording tape feed.

4. A recording device as claimed in Claim 3, characterised in that a floating mounting is provided for a feed reel (9) of the recording tape (6).

5. A recording device as claimed in Claim 1 or one of the preceding Claims, characterised in that the force-exerting element (5) is a spring.

**Claims** for the Contracting States DE, FR, GB, IT.

1. A recording device comprising a moving recording tape and at least one recording electrode comb (1) arranged transversely to the direction of feed of the recording tape and which is subjected to the influence of a force-exerting element (5) which is in the form of a spring and which permanently acts on the recording electrode comb (1) to lift it from the recording tape (6), and to the influence of an electromagnet (3) which, when excited, positions the recording electrode comb onto the recording tape, the switch-on operation of the electromagnet (3) being coupled to that of the recording tape feed.

2. A recording device as claimed in Claim 1, characterised in that the switch-on operation of the electromagnet (3) takes place with a delay, as compared with that of the recording tape feed.

3. A recording device as claimed in Claim 2, characterised in that the feed reel (9) of the recording tape (6) is floatingly mounted.

**Revendications** pour les Etats contractants AT, CH, LI, NL

1. Appareil d'enregistrement comportant une bande d'enregistrement mobile (6) et au moins un peigne (1) disposé transversalement par rapport à la direction d'avance de la bande d'enregistrement et comportant des électrodes d'écriture pouvant être écartées de la bande d'enregistrement, caractérisé par le fait que le peigne (1) est soumis à l'influence d'un organe (5) produisant une force, qui agit en permanence sur le peigne dans la direction l'écartant de la bande d'enregistrement (6), et à l'influence d'un électro-aimant (3) qui, à l'état branché, amène le peigne (1) en contact avec la bande d'enregistrement (6).

2. Appareil d'enregistrement suivant la revendication 1, caractérisé par le fait que le processus de branchement de l'électro-aimant (3) est couplé à celui de l'avance de la bande d'enregistrement.

3. Appareil d'enregistrement suivant la revendication 2, caractérisé par le fait que le processus de branchement de l'electro-aimant (3) s'effectue avec un retard par rapport à celui de déclenchement de l'avance de la bande d'enregistrement.

4. Appareil d'enregistrement suivant la revendication 3, caractérisé par le fait qu'un montage flottant est prévu pour le rouleau débiteur (9) de la bande d'enregistrement (6).

5. Appareil d'enregistrement suivant la revendication 1 ou l'une des revendications précédentes, caractérisé par le fait que l'organe (5) produisant une force est un ressort.

**Revendications** pour les Etats contractants DE, FR, GB, IT.

1. Appareil d'enregistrement comportant une bande d'enregistrement mobile et au moins un peigne d'électrodes d'écriture (1), disposé transversalement par rapport à la direction d'avance de la bande d'enregistrement et qui est soumis à l'influence d'un organe (5) produisant une force, qui agit en permanence sur le peigne dans une direction l'écartant de la bande d'enregistrement (6) et qui est réalisé sous la forme d'un ressort et d'un électro-aimant (3) qui lorsqu'il est excité, applique le peigne d'écriture sur la bande d'enregistrement, le processus de branchement de l'électro-aimant (3) étant couplé à l'avance de la bande d'enregistrement.

2. Appareil d'enregistrement suivant la revendication 1, caractérisé par le fait que l'opération de branchement de l'électro-aimant (3) s'effectue avec un retard par rapport à l'opération de déclenchement de l'avance de la bande d'enregistrement.

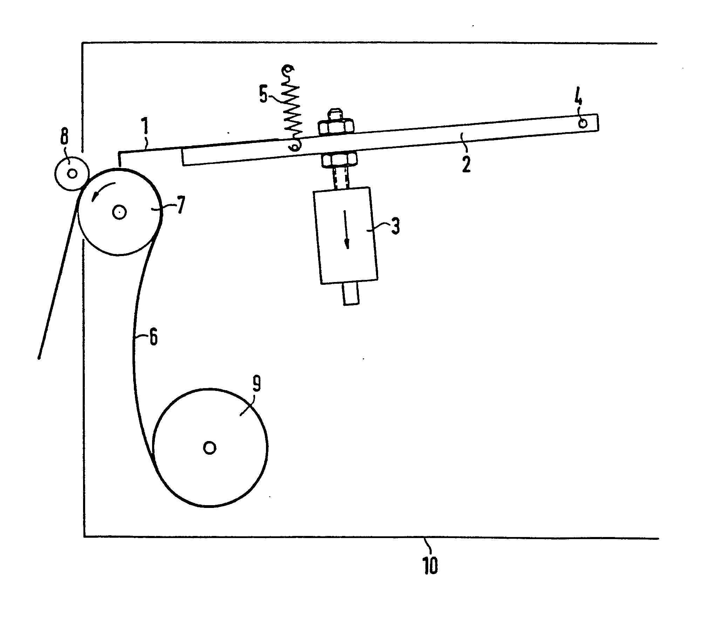

3. Appareil d'enregistrement suivant la revendication 2, caractérisé par le fait que le rouleau débiteur (9) de la bande d'enregistrement (6) est monté flottant.